# EUROPÄISCHE PATENTSCHRIFT

(11) **EP 2 791 480 B1**
(45) Veröffentlichungstag und Bekanntmachung des Hinweises auf die Patenterteilung: **10.08.2016**
(21) Anmeldenummer: 12798705.5
(22) Anmeldetag: 06.12.2012
(51) Int. Cl.: F01N 3/20

(54) **DOSIERANORDNUNG FÜR EIN FLÜSSIGES ABGASNACHBEHANDLUNGSMITTEL UND DOSIERVERFAHREN**
DOSING ARRANGEMENT FOR A LIQUID EXHAUST GAS AFTER-TREATMENT MEDIUM AND DOSING METHOD
SYSTÈME DE DOSAGE POUR UN AGENT DE RETRAITEMENT DE GAZ D'ÉCHAPPEMENT LIQUIDE ET PROCÉDÉ DE DOSAGE

(30) Priorität: 12.12.2011 DE 102011088221
(43) Veröffentlichungstag der Anmeldung: 22.10.2014
(73) Patentinhaber: Robert Bosch GmbH, 70442 Stuttgart (DE)
(72) Erfinder: ZERBIN, Siegfried, 73565 Hinterlintal (DE); GOTTWALD, Frank, 71287 Weissach (DE); HAMZIC, Mirza, 5020 Salzburg (AT)
(86) Internationale Anmeldenummer: PCT/EP2012/074584
(87) Internationale Veröffentlichungsnummer: WO 2013/087491

(56) Entgegenhaltungen:
- DE-A1-102008 000 594
- US-A1- 2010 242 439

## Beschreibung

### Stand der Technik

Die Erfindung geht aus von einer Dosieranordnung bzw. einem Dosierverfahren nach der Gattung der unabhängigen Ansprüche.

Bei selbstzündenden Brennkraftmaschinen ist zur Erfüllung der Umweltauflagen häufig ein SCR-Katalysator in der Abgasanlage vorgesehen. Damit der SCR-Katalysator die im Abgas enthaltenen NOx-Verbindungen in Wasser und Luftstickstoff umwandeln kann, wird stromaufwärts des SCR-Katalysators ein Abgasnachbehandlungsmittel, beispielsweise eine als Reduktionsmittel dienende flüssige Harnstoff-Wasser-Lösung in den Abgasstrang eingespritzt. Zu diesem Zweck wird beispielsweise ein Dosiersystem umfassend einen Reduktionsmitteltank, eine Reduktionsmittelpumpe und ein Dosiermodul, das ähnlich wie der Injektor einer Kraftstoffeinspritzanlage arbeitet, eingesetzt. Die Pumpe und zugeordnete Komponenten werden auch als Fördermodul bezeichnet.

Aufgabe des Fördermoduls bzw. der Pumpe ist es, Harnstoff-Wasser-Lösung aus dem Tank anzusaugen und auf der Druckseite einen ausreichenden Druck aufzubauen, so dass die flüssige Harnstoff-Wasser-Lösung fein zerstäubt wird, sobald das Dosiermodul bedarfsgesteuert öffnet und das Abgasnachbehandlungsmittel insbesondere nachmotorisch der Abgasanlage zuführt. Der Injektor ist ebenso wie das Fördermodul mit einem Steuergerät der Brennkraftmaschine verbunden und wird von diesem dem Bedarf entsprechend geöffnet und wieder geschlossen. Entsprechendes gilt auch für den Betrieb der Förderpumpe. Da Harnstoff-Wasser-Lösung die Eigenschaft hat, bei niedrigen Temperaturen einzufrieren und dabei sein Volumen um etwa 11 % zu vergrößern, müssen Maßnahmen getroffen werden, um Schäden an dem Dosiersystem durch gefrierende Harnstoff-Wasser-Lösung zu verhindern.

Zu diesem Zweck ist aus der EP1812144 bekannt, Harnstoff-Wasser-Lösung führende Leitungen zu belüften. Dazu ist die Pumpe mit einer umkehrbaren Förderrichtung ausgebildet bzw. es ist ein Ventil zur Umkehr der Förderrichtung der Pumpe vorgesehen. Es ist hier wie auch in der nachveröffentlichten DE102011081628 beschrieben, dass optional eine zweite Pumpe vorgesehen sein kann, um die Harnstofflösung aus dem Bereich der Förderleitung herauszupumpen.

Auch aus der DE102009029408 ist es bekannt, in das Dosiersystem ein 4/2 Wegeventil zu integrieren. In einer ersten Schaltstellung des 4/2-Wegeventils fördert die Pumpe Reduktionsmittel von dem Tank zum Dosiermodul. Wenn die Brennkraftmaschine abgestellt werden soll, wird das 4/2-Wegeventil in die zweite Schaltstellung gebracht, so dass die Pumpe des Fördermoduls flüssiges Reduktionsmittel von dem Dosiermodul in den Tank fördert und dadurch Teile des Dosiersystems belüftet. Dies setzt voraus, dass das Dosiermodul geöffnet ist und Luft bzw. Abgas aus dem Abgastrakt in das Dosiersystem nachströmen kann.

Durch das teilweise Belüften des Dosiersystems entsteht eine kompressible Luftblase, so dass, wenn die verbleibenden Reste des Reduktionsmittels im Dosiersystem gefrieren, der daraus resultierende Eisdruck so gering ist, dass keine Schäden am Dosiersystem auftreten. Ein solches 4/2-Wegeventil ist allerdings störungsanfällig und teuer.

Die DE 10 2008 000 594 offenbart eine Vorrichtung zum Entleeren einer Reduktionsmittelvorrichtung, welche einen mechanischen Energiespeicher aufweist.

### Offenbarung der Erfindung

Die erfindungsgemäße Dosieranordnung bzw. das erfindungsgemäße Verfahren zum Dosieren eines Abgasnachbehandlungsmittels mit den kennzeichnenden Merkmalen der unabhängigen Ansprüche haben demgegenüber den Vorteil, dass eine kostengünstige und zuverlässige Entleerung des Dosiersystems nach dem Abschalten der Brennkraftmaschine gewährleistet wird. Weil die Rücksaugpumpe lediglich dazu dient, das Dosiersystem zu belüften bzw. zu entleeren, ist eine geringe Förderleistung auch in größeren geografischen Höhen ausreichend. Auch werden nur geringe Anforderungen an den Förderdruck der Rücksaugpumpe gestellt. Dies führt dazu, dass die erfindungsgemäße Rücksaugpumpe kostengünstiger ist als ein 4/2-Wegeventil. Außerdem ist eine solche Pumpe weniger störungsanfällig als ein schaltbares 4/2-Wegeventil. Darüber hinaus wird ein Verfahren zur verbesserten Befüllung des SCR-Systems mit AdBlue in größeren Höhen bereitgestellt, das andere Funktionalitäten wie Nachlaufschutz und Rücksaugen parallel dazu gewährleistet beziehungsweise optimiert. Denn zur Inbetriebnahme muss zunächst Luft aus dem System gefördert, also entlüftet werden, und das System mit AdBlue gefüllt werden. Dazu muss das System in der Lage sein, auch in größeren geographischen Höhen die Luft aus dem System zu fördern. Es wird also in vorteilhafter Weise die Rücksaugfunktion und der Nachlaufschutz optimiert und gleichzeitig die Höhenfunktionalität (Entlüftung bzw. Befüllung mit AdBlue in größeren Höhen) bereitgestellt.

Durch die in den abhängigen Ansprüchen aufgeführten Maßnahmen sind vorteilhafte Weiterbildungen und Verbesserungen der in den unabhängigen Ansprüchen angegebenen Dosieranordnung bzw. des angegebenen Verfahrens möglich.

### Kurze Beschreibung der Zeichnungen

Ausführungsbeispiele der Erfindung sind in der Zeichnung dargestellt und in der nachfolgenden Beschreibung näher erläutert.

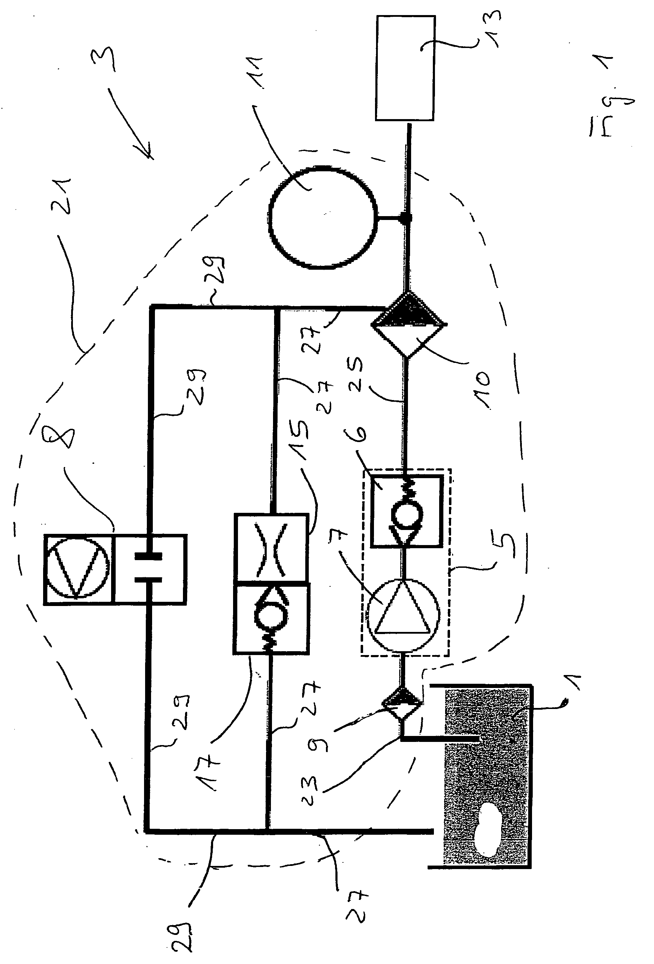

Es zeigt
- Figur 1: eine Dosieranordnung mit einer Rücksaugpumpe, die über eine Rücklaufleitung entleert.

### Ausführungsformen der Erfindung

Figur 1 zeigt eine Dosieranordnung 3 für eine als Abgasnachbehandlungsmittel eingesetzte wässrige Harnstofflösung, welche in einem Vorratstank 1 bevorratet wird. Hierbei ist ein Fördermodul 21 vorgesehen, welches über eine Druckleitung 25 mit einem Dosiermodul 13 verbunden ist. Das Fördermodul 21 umfaßt eine Förderpumpeneinheit 5, innerhalb der druckseitig einer Förderpumpe 7 ein Rückschlagventil 6 folgt. Saugseitig ist die Förderpumpe 7 über eine Saugleitung 23 mit dem Vorratstank 1 verbunden, wobei zwischen Tank 1 und Förderpumpeneinheit 5 ein Vorfilter 9 angeordnet ist. Die Druckleitung 25 verbindet einen druckseitigen Anschluß der Förderpumpeneinheit 5 über ein Hauptfilter 10 mit dem Dosiermodul 13. Im Bereich der Ausgangsseite des Hauptfilters 10 ist eine Rücklaufleitung 27 angeschlossen, welche zum Vorratstank 1 zurückführt und dort vorzugsweise oberhalb eines maximalen Füllstands des Tanks 1 endet. In der Rücklaufleitung 27 ist eine Reihenschaltung eines Rückschlagventils 17 mit einer Drossel 15 angeordnet. Das Rückschlagventil 17 ist auf der dem Tank zugewandten Seite der Rücklaufleitung angeordnet und kann zum Tank hin öffnen, und die Drossel 15 ist auf der dem Hauptfilter 10 zugewandten Seite der Rücklaufleitung angeordnet. Drossel 15 und Rückschlagventil 17 sind als integriertes Bauteil ausgebildet. Das Fördermodul 21 weist neben der Förderpumpe 7 eine bedarfsweise schaltbare Rücksaugpumpe 8 auf, welche über eine Rücksaugleitung 29 eingangsseitig über die Rücklaufleitung 27 mit der Druckleitung 25 verbunden ist. Ausgangsseitig der Rücksaugpumpe 8 führt die Rücksaugleitung 29 über die dem Tank zugewandte Seite der Rücklaufleitung 27 zurück zum Tank. An die Druckleitung 25 ist in einem Bereich zwischen dem Hauptfilter 10 und dem Dosiermodul 13 ein Drucksensor 11 angeschlossen.

Zum einen wird über die Förderpumpeneinheit im Dosierbetrieb das flüssige Abgasnachbehandlungsmittel aus dem Tank angesaugt und über das Dosiermodul 13, welches als schaltbares Ventil ausgestaltet sein kann, stromaufwärts insbesondere eines Katalysators zur selektiven katalytischen Reduktion dosiert in den Abgastrakt eingespritzt. Überschüssiges Abgasnachbehandlungsmittel fließt über die Rücklaufleitung 27 zurück in den Tank. Zum anderen wird nach Abstellen der Brennkraftmaschine zu Zwecken des Gefrier- bzw. Korrosionsschutzes das Leitungssytem leergesaugt. Hierzu wird das insbesondere elektrisch ansteuerbare Dosiermodul geöffnet und die Rücksaugpumpe 8 eingeschaltet, so dass über die Rücksaugpumpe 8 insbesondere das Dosiermodul und auch die ansonsten fluidführenden Leitungen entleert werden und das betreffende Abgasnachbehandlungmittel unter Nutzung der Rücklaufleitung 27 insbesondere auf der dem Tank zugewandten Seite der Rücklaufleitung 27 wieder dem Tank 1 zugeführt wird.

Es gibt 4 Funktionalitäten, die mit der Dosieranordnung optimal dargestellt werden sollen:

### a) Nachlaufschutz:

Um insbesondere im Falle der Ausführung des Dosiermoduls 13 als einfache Düse das Nachlaufen von AdBlue im abgestellten System zu minimieren bzw. zu vermeiden, sollte das Druckauslass-Ventil 6 der Förderpumpeneinheit 5 eine maximale Dichtheit aufweisen. Dies kann durch einen hohen Gegendruck am Druckauslass-Ventil verbessert werden, also durch eine große Federkonstante der im als Rückschlagventil ausgeführten Druckauslassventil 6 eingebauten Feder.

### b) Rücksaugen:

Die Rücksaugpumpe 8 erzeugt im Betrieb einen Unterdruck auf ihrer Saugseite. Der Unterdruck führt zu verbesserter Entleerung insbesondere der Druckleitung 25, speziell wenn ein Höhenunterschied zwischen dem Fördermodul 21 und einem tiefergelegenen Dosiermodul 13 überwunden werden muß. Ein hoher Unterdruck auf der Saugseite der Rücksaugpumpe 8 kann jedoch das Rückschlagventil 6 der Förderpumpeneinheit 5 öffnen und AdBlue aus dem Tank zurück in den Tank pumpen. Ein Rückschlagventil 6 mit geringer Schließkraft verringert also die Fähigkeit des Systems zur Entleerung. Eine große Federkraft des Rückschlagventils 6 verbessert die Fähigkeit des Systems zur Entleerung, d.h. zu einem wirksamen Rücksaugen.

### c) Effizienz der Hauptpumpe:

Große Kräfte am Druckauslass-Ventil 6 verringern die Effizienz der Förderpumpe 7, weil bei jedem Förderhub die Schließkraft des Ventils 6 überwunden werden muß. Unter diesem Gesichtspunkt ist ein leicht öffenbares Druckauslass-Ventil 6 vorteilhaft.

### d) Entlüftung:

Zur genauen Dosierung des Abgasnachbehandlungsmittels darf sich in den fluidführenden Leitungen keine Luft befinden. Zu diesem Zweck wird die Anordnung bedarfsweise entlüftet. Für die Förderung von Luft (Verdichtung von Luft) durch die Förderpumpe 7 in großer Höhe, beispielsweise in einer Höhe von bis zu 4000 Meter, sollte das Druckauslass-Ventil 6 eine gewisse Druckschwelle nicht überschreiten, damit Luft bei verringertem Umgebungsdruck gefördert werden kann. Ist der durch das Druckauslass-Ventil 6 aufgebaute Gegendruck zu hoch, kann das System nicht entlüftet werden. Um den Nachlaufschutz und das Rücksaugen zu optimieren, muß jedoch ein Druckauslassventil 6 mit einer großen Federkonstante eingesetzt werden. Um dennoch eine gute Entlüftungsfunktion bereitzustellen, wird die Rücksaugpumpe zur Entlüftung des Systems beitragen. Die Rücksaugpumpe 8 erzeugt hierzu einen Unterdruck auf der Druckseite der Förderpumpeneinheit 5, der die Förderpumpe 7 beim Überdrücken der Gegenkraft des Auslassventils 6 mit Luft unterstützt. In großer Höhe, beispielsweise in einer Höhe von bis zu 4000 Meter, werden daher beide Pumpen zur Darstellung der Entlüftungsfunktionalität aktiviert, so dass gewissermaßen eine Durchspülung des Fördermoduls mit der wässrigen Harnstofflösung durch Ansaugen von Harnstofflösung aus dem Tank über die Saugleitung 23 und Zurückbefördern der Harnstofflösung durch die Rücksaugpumpe 8 über die Rücklaufleitung 27 erfolgen kann. Dies geschieht vorzugsweise unmittelbar nach Inbetriebnahme der Brennkraftmaschine oder beim laufenden Betrieb, wenn der Drucksensor 11 einen Druckabfall registriert. In einem entsprechenden, nicht näher dargestellten Steuergerät sind die genannten Funktionen, einschließlich der Dosierung des Reduktionsmittels in den Abgastrakt, realisiert. Hierzu ist ein solches Steuergerät beispielsweise auch mit dem Drucksensor 11, dem elektrisch ansteuerbaren Dosiermodul 13, der Förderpumpe 7 und der Rücksaugpumpe 8 elektrisch verbunden. Über den Drucksensor 11 können während des laufenden Betriebs Druckabfälle erkannt und gegebenenfalls als Anzeichen für ein Vorhandensein von Luft in den fluidführenden Leitungen gewertet werden, so dass ein entsprechender Entlüftungsvorgang, das heißt eine zeitgleiche Aktivierung von Förderpumpe 7 und Rücksaugpumpe 8, eingeleitet wird.

## Patentansprüche

1. Dosieranordnung (3) für ein flüssiges Abgasnachbehandlungsmittel zur Nachbehandlung des Abgases einer eine Abgasanlage aufweisenden
Brennkraftmaschine, insbesondere für eine Harnstoff-Wasser-Lösung, aufweisend eine Förderpumpe (7) und ein Dosiermodul (13), wobei die Förderpumpe (7) mit einer Saugleitung (23) verbunden ist zum Ansaugen des Abgasnachbehandlungsmittels aus einem Tank (1), wobei die Förderpumpe (7) und das Dosiermodul (13) über eine Druckleitung (25) miteinander verbunden sind und das Abgasnachbehandlungsmittel über das Dosiermodul (13) der Abgasanlage zuführbar ist, wobei eine Rücksaugpumpe (8) vorgesehen ist, wobei die Rücksaugpumpe (8) saugseitig mit dem Dosiermodul (13) verbunden ist und von der Rücksaugpumpe (8) gefördertes Abgasnachbehandlungsmittel über eine von der Saugleitung (23) verschiedene Leitung zum Tank zurückführbar ist, wobei die Rücksaugpumpe als einschaltbare Rücksaugpumpe ausgestaltet ist, so daß bedarfsweise bei geschlossenem Dosiermodul (13) eine Entlüftung der Leitungen (23, 25), beispielsweise unmittelbar nach Inbetriebnahme der Brennkraftmaschine oder beim laufenden Betrieb, erfolgen
kann, **dadurch gekennzeichnet, dass** die Spülung mittels eines Steuergeräts durch eine Aktivierungsowohl der Förderpumpe (7) als auch der Rücksaugpumpe (8) erfolgt, so dass zeitweise beide
Pumpen in Betrieb sind.

2. Dosieranordnung nach Anspruch 1, **dadurch gekennzeichnet, daß** die Entlüftung der Leitungen (23, 25) durch eine Spülung der Leitungen mit dem
Abgasnachbehandlungsmittel erfolgt.

3. Dosieranordnung nach Anspruch 1 oder 2, **dadurch gekennzeichnet, dass** die Druckleitung (25) zwischen der Förderpumpe (7) und dem Dosiermodul (13) mit einer in den Tank mündenden Rücklaufleitung (27) verbunden ist.

4. Dosieranordnung nach Anspruch 3, **dadurch gekennzeichnet**, die Rücklaufleitung (27) eine Drossel (15) und/oder ein zum Tank (1) hin öffnendes Rückschlagventil (17) aufweist.

5. Dosieranordnung nach Anspruch 3 oder 4, **dadurch gekennzeichnet, dass** die von der Saugleitung (23) verschiedene Leitung die Rücklaufleitung (27) ist.

6. Dosieranordnung nach einem der vorhergehenden Ansprüche, **dadurch gekennzeichnet, dass** die Druckleitung (25) vor dem Dosiermodul (13) mit einem Drucksensor (11) verbunden ist.

7. Dosieranordnung nach einem der vorhergehenden Ansprüche, **dadurch gekennzeichnet, dass** zwischen der Förderpumpe (7) und dem Dosiermodul (13) ein Filter (10) angeordnet ist.

8. Dosieranordnung nach einem der vorhergehenden,Ansprüche, **dadurch gekennzeichnet, dass** zwischen der Förderpumpe (7) und dem Dosiermodul (13) ein Rückschlagventil (6) angeordnet ist.

9. Dosieranordnung nach einem der vorhergehenden Ansprüche, **dadurch gekennzeichnet, dass** in der Saugleitung (23) ein Vorfilter (9) angeordnet ist.

10. Dosieranordnung nach einem der vorhergehenden Ansprüche, **dadurch gekennzeichnet, dass** die Förderpumpe (7) und/oder die Rücksaugpumpe (8) als Membranpumpe, insbesondere als Membranpumpe mit einem sich drehenden Betätigungselement, ausgebildet ist.

11. Verfahren zum Dosieren eines flüssigen Abgasnachbehandlungsmittels, insbesondere einer Harnstoff-Wasser-Lösung, zur Nachbehandlung des Abgases einer eine Abgasanlage aufweisenden Brennkraftmaschine, bei dem mittels einer Förderpumpe (7) das Abgasnachbehandlungsmittel über eine Saugleitung (23) aus einem Tank (1) angesaugt und über ein mit der Förderpumpe über eine Druckleitung (25) verbundenes Dosiermodul (13) der Abgasanlage zugeführt wird, wobei bedarfsweise das aus dem Tank angesaugte Abgasnachbehandlungsmittel mittels einer Rücksaugpumpe (8) zum Tank zurückgeführt wird, so dass bei geschlossenem Dosiermodul (13) eine Entlüftung der Leitungen (23, 25), beispielsweise unmittelbar nach Inbetriebnahme der Brennkraftmaschine oder beim laufenden Betrieb, erfolgt, **dadurch gekennzeichnet, dass** die Spülung durch eine Aktivierung sowohl der Förderpumpe (7) als auch der Rücksaugpumpe (8) erfolgt, so dass zeitweise beide Pumpen in Betrieb sind.

12. Verfahren nach Anspruch 11, **dadurch gekennzeichnet, daß** die Entlüftung der Leitungen (23, 25) durch eine Spülung der Leitungen mit dem Abgasnachbehandlungsmittel erfolgt.

## Claims

1. Metering arrangement (3) for a liquid exhaust gas post-treatment medium for the post-treatment of exhaust gas of an internal combustion engine having an exhaust system, in particular for a urea/water solution, having a delivery pump (7) and a metering module (13), wherein the delivery pump (7) is connected to a suction line (23) for sucking in the exhaust gas post-treatment medium from a tank (1), wherein the delivery pump (7) and the metering module (13) are connected to one another via a pressure line (25), and the exhaust gas post-treatment medium can be fed to the exhaust system via the metering module (13), wherein a return pump (8) is provided, wherein the return pump (8) is connected on the suction side to the metering module (13), and the exhaust gas post-treatment medium which is delivered by the return pump (8) can be fed back to the tank via a line which is different from the suction line (23), wherein the return pump is configured as a return pump which can be switched on, with the result that, when necessary, the lines (23, 25) can be vented with the metering module (13) closed, for example directly after the actuation of the internal combustion engine or during ongoing operation, **characterized in that** the scavenging is carried out by means of a control unit by activating the delivery pump (7) and the return pump (8), with the result that both pumps are operational for a certain time.

2. Metering arrangement according to Claim 1, **characterized in that** the venting of the lines (23, 25) is carried out by scavenging the lines with the exhaust gas post-treatment means.

3. Metering arrangement according to Claim 1 or 2, **characterized in that** the pressure line (25) between the delivery pump (7) and the metering module (13) is connected to a return line (27) which opens into the tank.

4. Metering arrangement according to Claim 3, **characterized in that** the return line (27) has a throttle (15) and/or a non-return valve (17) which opens toward the tank (1).

5. Metering arrangement according to Claim 3 or 4, **characterized in that** the line which is different from the suction line (23) is the return line (27).

6. Metering arrangement according to one of the preceding claims, **characterized in that** the pressure line (25) is connected to a pressure sensor (11) upstream of the metering module (13).

7. Metering arrangement according to one of the preceding claims, **characterized in that** a filter (10) is arranged between the delivery pump (7) and the metering module (13).

8. Metering arrangement according to one of the preceding claims, **characterized in that** a non-return valve (6) is arranged between the delivery pump (7) and the metering module (13).

9. Metering arrangement according to one of the preceding claims, **characterized in that** a prefilter (9) is arranged in the suction line (23).

10. Metering arrangement according to one of the preceding claims, **characterized in that** the delivery pump (7) and/or the return pump (8) is/are embodied as a diaphragm pump, in particular as a diaphragm pump with a rotating activation element.

11. Method for metering a liquid exhaust gas post-treatment medium, in particular a urea/water solution, for the post-treatment of the exhaust gas of an internal combustion engine having an exhaust system, in which method the exhaust gas post-treatment medium is sucked out of a tank (1) via a suction line (23) by means of a delivery pump (7) and is fed to the exhaust gas system via a metering module (13) which is connected to the delivery pump via a pressure line (25), wherein when necessary the exhaust gas post-treatment medium which is sucked out of the tank is fed back to the tank by means of a return pump (8), with the result that when the metering module (13) is closed, the lines (23, 25) can be vented, for example, directly after the activation of the internal combustion engine or during ongoing operation, **characterized in that** the scavenging is carried out by activating both the delivery pump (7) and the return pump (8), with the result that both pumps are operational for a certain time.

12. Method according to Claim 11, **characterized in that** the venting of the lines (23, 25) is carried out by scavenging the lines with the exhaust gas post-treatment medium.

## Revendications

1. Système de dosage (3) pour un agent de post-traitement de gaz d'échappement fluide pour le post-traitement du gaz d'échappement d'un moteur à combustion interne présentant une installation de gaz d'échappement, en particulier pour une solution d'urée aqueuse, présentant une pompe de refoulement (7) et un module de dosage (13), la pompe de refoulement (7) étant raccordée à une conduite d'aspiration (23) pour aspirer l'agent de post-traitement de gaz d'échappement hors d'un réservoir (1), la pompe de refoulement (7) et le module de dosage (13) étant raccordés l'un à l'autre par le biais d'une conduite de pression (25) et l'agent de post-traitement de gaz d'échappement pouvant être acheminé à l'installation de gaz d'échappement par le biais du module de dosage (13), une pompe de réaspiration (8) étant prévue, la pompe de réaspiration (8) étant raccordée du côté de l'aspiration au module de dosage (13) et l'agent de post-traitement de gaz d'échappement refoulé par la pompe de réaspiration (8) pouvant être ramené au réservoir par le biais d'une conduite différente de la conduite d'aspiration (23), la pompe de réaspiration étant configurée sous forme de pompe de réaspiration pouvant être mise en circuit de sorte que lorsque le module de dosage (13) est fermé, une ventilation des conduites (23, 25), par exemple directement après la mise en route du moteur à combustion interne ou pendant un fonctionnement en continu, puisse au besoin être effectuée, **caractérisé en ce que** le rinçage au moyen d'un appareil de commande a lieu par une activation de la pompe de refoulement (7) et de la pompe de réactivation (8) de telle sorte que les deux pompes soient temporairement en service.

2. Système de dosage selon la revendication 1, **caractérisé en ce que** la ventilation des conduites (23, 25) s'effectue par un rinçage des conduites avec l'agent de post-traitement de gaz d'échappement.

3. Système de dosage selon la revendication 1 ou 2, **caractérisé en ce que** la conduite de pression (25) est raccordée entre la pompe de refoulement (7) et le module de dosage (13) à une conduite de retour (27) débouchant dans le réservoir.

4. Système de dosage selon la revendication 3, **caractérisé en ce que** la conduite de retour (27) présente un étranglement (15) et/ou un clapet antiretour (17) s'ouvrant vers le réservoir (1).

5. Système de dosage selon la revendication 3 ou 4, **caractérisé en ce que** la conduite différente de la conduite d'aspiration (23) est la conduite de retour (27).

6. Système de dosage selon l'une quelconque des revendications précédentes, **caractérisé en ce que** la conduite de pression (25) est raccordée à un capteur de pression (11) en amont du module de dosage (13).

7. Système de dosage selon l'une quelconque des revendications précédentes, **caractérisé en ce qu'**entre la pompe de refoulement (7) et le module de dosage (13) est disposé un filtre (10).

8. Système de dosage selon l'une quelconque des revendications précédentes, **caractérisé en ce qu'**entre la pompe de refoulement (7) et le module de dosage (13) est disposé un clapet antiretour (6).

9. Système de dosage selon l'une quelconque des revendications précédentes, **caractérisé en ce qu'**un préfiltre (9) est disposé dans la conduite d'aspiration (23).

10. Système de dosage selon l'une quelconque des revendications précédentes, **caractérisé en ce que** la pompe de refoulement (7) et/ou la pompe de réaspiration (8) sont réalisées sous forme de pompe à membrane, en particulier sous forme de pompe à membrane avec un élément d'actionnement rotatif.

11. Procédé de dosage d'un agent de post-traitement de gaz d'échappement fluide, en particulier d'une solution d'urée aqueuse, pour le post-traitement du gaz d'échappement d'un moteur à combustion interne présentant une installation de gaz d'échappement, dans lequel, au moyen d'une pompe de refoulement (7), l'agent de post-traitement de gaz d'échappement est aspiré par le biais d'une conduite d'aspiration (23) hors d'un réservoir (1) et, par le biais d'un module de dosage (13) raccordé à la pompe de refoulement par le biais d'une conduite de pression (25), est acheminé à l'installation de gaz d'échappement, l'agent de post-traitement de gaz d'échappement aspiré hors du réservoir étant ramené au besoin au réservoir au moyen d'une pompe de réaspiration (8), de telle sorte que lorsque le module de dosage (13) est fermé, une ventilation des conduites (23, 25), ait lieu, par exemple directement après la mise en route du moteur à combustion interne ou pendant le fonctionnement en continu, **caractérisé en ce que** le rinçage s'effectue par une activation à la fois de la pompe de refoulement (7) et de la pompe de réaspiration (8), de sorte que les deux pompes soient temporairement en service.

12. Procédé selon la revendication 11, **caractérisé en ce que** la ventilation des conduites (23, 25) s'effectue par un rinçage des conduites avec l'agent de post-traitement de gaz d'échappement.
